# EUROPEAN PATENT SPECIFICATION

(11) **EP 4 012 250 B1**
(45) Date of publication and mention of the grant of the patent: **07.10.2026**
(21) Application number: 20896068.2
(22) Date of filing: 31.08.2020
(51) Int. Cl.: B60G 11/27, B60G 17/0185, B60G 17/0195, B60T 13/66, B60T 13/68, B60T 17/02, B60T 17/06, F15B 19/00, F15B 20/00, F15B 21/048, E05F 15/50

(54) **PNEUMATIC CONTROL METHOD AND APPARATUS, AND COMPUTER-READABLE STORAGE MEDIUM AND VEHICLE**
VERFAHREN UND VORRICHTUNG ZUR PNEUMATISCHEN STEUERUNG, COMPUTERLESBARES SPEICHERMEDIUM UND FAHRZEUG
PROCÉDÉ ET APPAREIL DE COMMANDE DE PNEUMATIQUE, SUPPORT DE STOCKAGE LISIBLE PAR ORDINATEUR ET VÉHICULE

(30) Priority: 04.12.2019 CN 201911227667
(43) Date of publication of application: 15.06.2022
(73) Proprietor: Gree Electric Appliances, Inc. of Zhuhai, Zhuhai, Guangdong 519070 (CN)
(72) Inventor: WEI, Heng, Zhuhai, Guangdong 519070 (CN); QIU, Dong, Zhuhai, Guangdong 519070 (CN); LIU, Rensheng, Zhuhai, Guangdong 519070 (CN); LIU, Zhaobin, Zhuhai, Guangdong 519070 (CN); CHEN, Hui, Zhuhai, Guangdong 519070 (CN); PAN, Gaoqiang, Zhuhai, Guangdong 519070 (CN); ZHU, Shouchao, Zhuhai, Guangdong 519070 (CN)
(74) Representative: Appleyard Lees IP LLP
(86) International application number: PCT/CN2020/112446
(87) International publication number: WO 2021/109643

(56) References cited:
- EP-A1- 4 140 851
- WO-A1-2006/056214
- WO-A1-2018/183167
- WO-A1-2018/183167
- WO-A1-2018/183167
- CN-A- 101 493 142
- CN-A- 108 128 299
- CN-A- 108 128 299
- CN-A- 111 038 423
- DE-A1- 102014 222 977
- DE-A1- 19 515 895
- JP-B2- 4 672 388
- US-A1- 2018 194 353
- US-A1- 2020 014 318
- US-B2- 8 661 875

## Description

### TECHNICAL FIELD

The present invention belongs to the technical field of vehicles, particularly, to a pneumatic control method and a device, a computer-readable storage medium, and a vehicle, particularly, an air leakage fault detection method for a pneumatic system and a device, a computer-readable storage medium and a vehicle.

### BACKGOUND

Air compressor is an equipment for supplying compressed air and the power source of the pneumatic system on the vehicle. For commercial vehicles and some passenger cars equipped with air suspensions, compressed air is used as the power source of the braking system, the air spring suspension or the door control system.

The air spring suspension equipment on the commercial vehicle or the passenger car is the equipment of a pneumatic system using air source, and is commonly used in the passenger car, especially an off-road vehicle or a vehicle for all road conditions. On the commercial vehicle, whether it is a horizontal adjustment device controlled by a common height valve, or a horizontal adjustment device having a height sensor and an electronic control unit, sufficient air supply power is required to ensure the operation of the system.

According to the response requirements of each pneumatic system for the compressed air, air reservoirs with different volumes and pressures are designed. The inflation and a stop of the inflation of each air reservoir are controlled by the pressure switch thereon. The air compressor will continuously supply compressed air according to the inflation demand of the air reservoir. The pressure in the pipeline system of the commercial vehicle is about 10 bars. Due to small installation space of the passenger car, the pressure of the electronically controlled air suspension system may reach 18 bars to 20 bars.

At present, the air leakage fault caused by their own valves, pipelines or other cases of each pneumatic system leads to a frequent inflation demand for the air supply system of the air compressor, which directly causes a faulty operation of the pneumatic system and an overload operation of the air compressor. Document WO2018/183167 A1 discloses a system for detecting a compressed air system leak. Such document discloses a pneumatic control method, comprising: determining whether there is an air leakage fault in an air reservoir of a pneumatic system of N pneumatic systems supplied with air by an air compressor of a vehicle, wherein N is a natural number; if there is an air leakage fault in the air reservoir of the pneumatic system, issuing a reminder that there is an air leakage fault in the air reservoir of the pneumatic system, and controlling the air compressor to be on to ensure a normal operation of the pneumatic systems of the vehicle; if there is no air leakage fault in the air reservoir of the pneumatic system, determining whether there is an air leakage fault in an air reservoir of a pneumatic system. Document WO2006/056214 A1 discloses a diagnosis device for at least one pneumatic valve actuator arrangement, comprising a pressure sensor, a volume flow sensor, a control device for producing control signals for the valve actuator arrangement and position sensors for detecting the position of at least one moveable actuator member. Document DE19515895 A1 discloses a proposal for an air compressor from the outlet of which a supply line leads to an air drier. Document US2018/194353 A1 discloses a vehicle including a fault-tolerant braking system that controls a brake assembly which is configured to adjust a braking force applied to one or more wheels. Document CN108128299 A discloses an online inflation and detection system and method for a pneumatic brake vehicle.

The contents above are only used to assist in understanding the technical solutions of the present invention, but it isn't acknowledged that the above contents belong to the prior art.

### SUMMARY

In view of the defects above, the objective of the present invention is to provide a pneumatic control method and a device, computer-readable storage medium, and a vehicle, so as to solve a problem of an overload operation of an air compressor due to an air leakage fault of a pneumatic system, and to achieve an effect of avoiding the overload operation of the air compressor caused by the air leakage fault of the pneumatic system.

The present invention provides a pneumatic control method as stated in the independent claim 1.

In some embodiments, the method further includes: initializing a recorded value of a number of an inflation request and a timed value of a single inflation time of an air reservoir of each of the N pneumatic systems; determining whether the inflation request of the air reservoir of the pneumatic system with the first priority among the N pneumatic systems is received; if the inflation request of the air reservoir of the pneumatic system with the first priority is received, controlling the air compressor to turn on to inflate the air reservoir of the pneumatic system with the first priority; while accumulating the recorded value of the number of the inflation request of the air reservoir of the pneumatic system with the first priority by 1, and timing the single inflation time of the air reservoir of the pneumatic system with the first priority; thereafter, determining whether there is an air leakage fault in the air reservoir of the pneumatic system with the first priority.

In some embodiments, the determining whether the inflation request of the air reservoir of the pneumatic system with the first priority among the N pneumatic systems is received includes: obtaining a pressure signal of the air reservoir of the pneumatic system with the first priority, and determining whether the pressure signal is less than or equal to a lower limit of a set pressure range, or whether the pressure signal is greater than or equal to an upper limit of the set pressure range; if the pressure signal of the air reservoir of the pneumatic system with the first priority is less than or equal to the lower limit of the set pressure range of the air reservoir of the pneumatic system with the first priority, determining that the inflation request of the pneumatic system with the first priority is received; if the pressure signal of the air reservoir of the pneumatic system with the first priority is greater than or equal to the upper limit of the set pressure range of the air reservoir of the pneumatic system with the first priority, determining that no inflation request of the pneumatic system with the first priority is received.

In some embodiments, the method further includes: if there is no air leakage fault in the air reservoir of the pneumatic system with the first priority, resetting a recorded number of an inflation request and a timed value of a single inflation time of the air reservoir of the pneumatic system with the first priority, then determining whether there is an air leakage fault in the air reservoir of the pneumatic system with the second priority.

Corresponding to the above method, another aspect of the present invention provides a pneumatic control device, as stated in the independent claim 5.

In some embodiments, the device further includes: the determining unit, further configured to initialize a recorded value of a number of an inflation request and a timed value of a single inflation time of an air reservoir of each of the N pneumatic systems; the determining unit, further configured to determine whether the inflation request of the air reservoir of the pneumatic system with the first priority among the N pneumatic systems is received; the determining unit, further configured to, if the inflation request of the air reservoir of the pneumatic system with the first priority is received, control the air compressor to turn on to inflate the air reservoir of the pneumatic system with the first priority, accumulate the recorded value of the number of the inflation request of the air reservoir of the pneumatic system with the first priority by 1, and time the single inflation time of the air reservoir of the pneumatic system with the first priority, thereafter, determine whether there is an air leakage fault in the air reservoir of the pneumatic system with the first priority.

In some embodiments, the determining unit determining whether the inflation request of the air reservoir of the pneumatic system with the first priority among the N pneumatic systems is received includes: obtaining a pressure signal of the air reservoir of the pneumatic system with the first priority, and determining whether the pressure signal is less than or equal to a lower limit of a set pressure range, or whether the pressure signal is greater than or equal to an upper limit of the set pressure range; if the pressure signal of the air reservoir of the pneumatic system with the first priority is less than or equal to the lower limit of the set pressure range of the air reservoir of the pneumatic system with the first priority, determining that the inflation request of the pneumatic system with the first priority is received; if the pressure signal of the air reservoir of the pneumatic system with the first priority is greater than or equal to the upper limit of the set pressure range of the air reservoir of the pneumatic system with the first priority, determining that no inflation request of the pneumatic system with the first priority is received.

In some embodiments, the device further includes: the determining unit is further set to reset the recorded value of the number of an inflation request and the timed value of a single inflation time of the air reservoir of the pneumatic system of the first priority in the case that there is no an air leakage fault in the air reservoir of the pneumatic system with the first priority. Thereafter, it is determined whether there is an air leakage fault in the air reservoir of the pneumatic system with the second priority.

Corresponding to the above device, still another aspect of the present invention provides a vehicle, including the above-mentioned pneumatic control device.

Corresponding to the above method, still another aspect of the present invention provides a computer-readable storage medium storing a plurality of instructions, and the plurality of instructions are configured to be loaded by a processor to execute the pneumatic control method.

Corresponding to the above method, still another aspect of the present invention provides a vehicle including: a processor configured to execute a plurality of instructions, and a memory configured to store a plurality of instructions. The plurality of instructions are configured to be stored in the memory and loaded by the processor to execute the pneumatic control method described above.

The solution of the present invention may improve the reliability and safety of the operation of the air compressor by realizing the limited number of air supply and the fault location and maintenance of the air pipeline system.

In some embodiments, the technical solutions of the present invention may realize the detection of air leakage faults for the pneumatic systems by detecting air leakage faults of various pneumatic systems, thereby preventing the air compressor of the pneumatic systems from overload.

In some embodiments, in the technical solutions of the present invention, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected, and the detection is accurate and reliable.

In some embodiments of the solution of the present invention, by using the technical solution of the present invention, the air leakage fault of the pneumatic system may be detected as soon as possible by combining with the priorities of the pneumatic systems and responding in sequence, and corresponding fault indications are provided for the responses based on different systems, which makes it convenient to locate the faults and may further improve the accuracy and efficiency of the fault detection.

In some embodiments of the solution of the present invention, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected as soon as possible by combining with the priorities of the pneumatic systems and responding in sequence, and corresponding fault indications are provided for the responses based on different systems, which makes it convenient to locate the faults and the cost low.

Therefore, in the technical solutions of the present invention, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping. Moreover, by combining with the priorities of the pneumatic systems, the fault is located, thus solving the problem of the overload operation of the air compressor due to the air leakage fault of the pneumatic system, achieving an effect of improving safety of operation of the air compressor, and avoiding the overload operation of the air compressor caused by the air leakage fault of the pneumatic system.

Other features and advantages of the present invention will be illustrated in the following description herein, and will be apparent from the description partially, or will be understood by implementing the present invention.

The technical solutions of the present invention will be further described in detail below through the accompanying drawings and embodiment.

### DESCRIPTION OF THE DRAWINGS

FIG. 1 is a schematic flow diagram of a pneumatic control method according to an embodiment of the present invention;
FIG. 2 is a schematic flow diagram of processing an inflation request according to an embodiment of the method of the present invention;
FIG. 3 is a schematic flow diagram of determining whether an inflation request from an air reservoir of a pneumatic system with a first priority among N pneumatic systems is received according to an embodiment of the method of the present invention;
FIG. 4 is a schematic flow diagram of determining whether the air reservoir is leaking based on a single inflation time according to an embodiment of the method of the present invention;
FIG. 5 is a schematic flow diagram of determining whether the air reservoir is leaking based on the number of the inflation request according to an embodiment of the method of the present invention;
FIG. 6 is a schematic structural view showing a pneumatic control device according to an embodiment of the present invention;
FIG. 7 is a schematic structural view showing an air supplying system including an air compressor and pneumatic systems (taking an air spring suspension as an example) of a vehicle according to an embodiment of the present invention;
FIG. 8 is a schematic view showing switched states of a pressure switch of the vehicle according to an embodiment of the present invention;
FIG. 9 is a flow chart of diagnosing an air leakage fault by an air supply processing unit of the vehicle according to an embodiment of the present invention;
FIG. 10 is a schematic view showing an air supply processing unit of the vehicle according to an embodiment of the present invention.

In combination with the accompanying drawings, reference numerals in the embodiments of the present invention are as follows:
1- air filter; 2- air compressor; 3- air drier; 4- four-way valve (i.e. four-way protecting valve); 5- check valve; 61- first pressure switch (e.g. pressure switch S₁); 62- second pressure switch (e.g. pressure switch S₂); 63- third pressure switch (e.g. pressure switch S₃); 64- fourth pressure switch (e.g. pressure switch S₄); 7- motor; 8- air supply processing unit; 102-determining unit; 104- control unit.

### DETAILED DESCRIPTION OF EMBODIMENTS

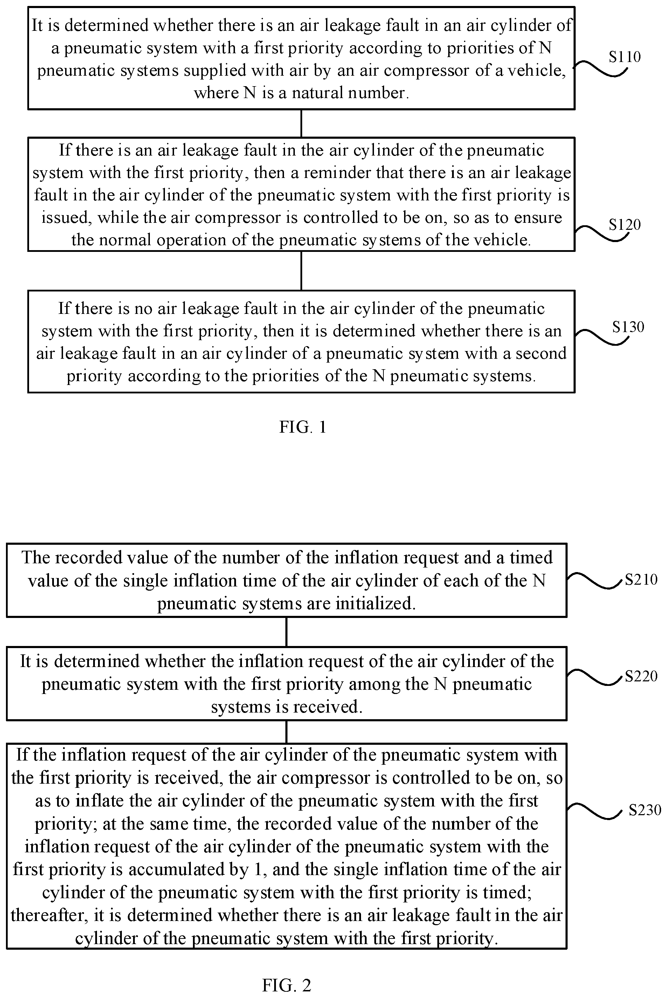

According to an embodiment of the present invention, a pneumatic control method is provided. As shown in FIG. 1, a schematic flow diagram of a pneumatic control method according to an embodiment of the present invention, the pneumatic control method may include step S110 to step S130.

At step S110, it is determined whether there is an air leakage fault in an air reservoir of a pneumatic system with a first priority according to priorities of N pneumatic systems supplied with air by an air compressor of a vehicle. N is a natural number. The pneumatic system with the first priority may be the pneumatic system with the highest priority among the N pneumatic systems, or the pneumatic system with the lower priority among the N pneumatic systems. For example, the priorities of the pressure switches of the service braking system, the parking braking system, the air suspension system, and the door control system may descend in sequence as follows: S₁> S₂> S₃> S₄. When the air compressor is turned on, the air reservoirs of all pneumatic systems will be inflated, so the inflation requests are judged in sequence in the logic of the air supply processing unit according to the priorities of the pneumatic systems.

In some embodiments, the step S110 of determining whether there is an air leakage fault in the air reservoir of the pneumatic system with the first priority may include any one of the following determination processes.

A first determination process is a process of determining whether the air reservoir is leaking according to a single inflation time.

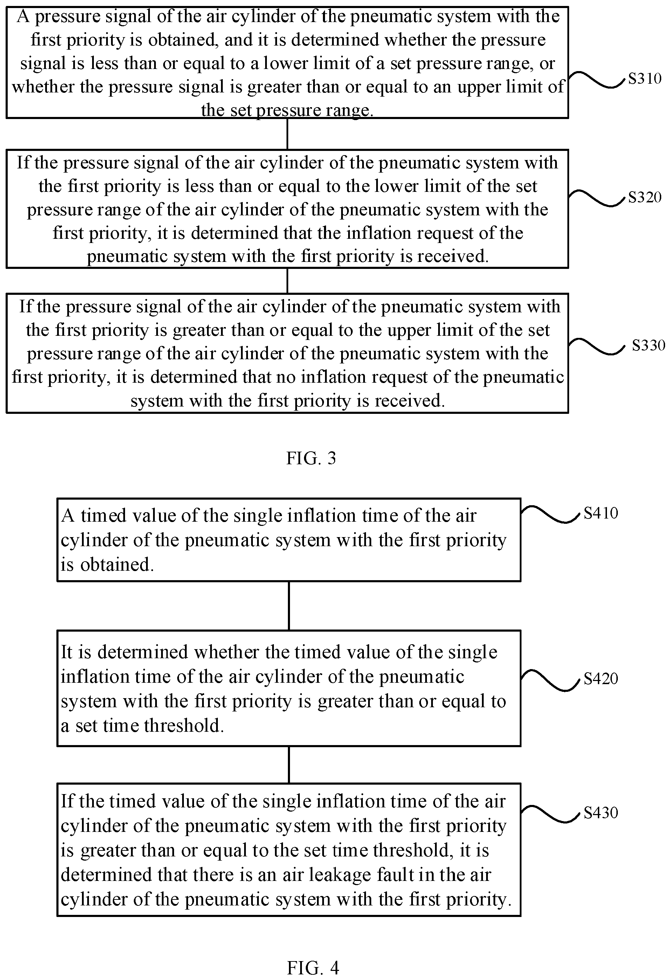

Referring to FIG. 4, a schematic flow diagram of determining whether the air reservoir is leaking based on a single inflation time according to an embodiment of the method of the present invention, a specific process of determining whether the air reservoir is leaking according to the single inflation time in the step S110 to be further illustrated may include step S410 to step S430.

At step S410, a timed value of the single inflation time of the air reservoir of the pneumatic system with the first priority is obtained.

At step S420, it is determined whether the timed value of the single inflation time of the air reservoir of the pneumatic system with the first priority is greater than or equal to a set time threshold.

At step S430, if the timed value of the single inflation time of the air reservoir of the pneumatic system with the first priority is greater than or equal to the set time threshold, it is determined that there is an air leakage fault in the air reservoir of the pneumatic system with the first priority. For example, a time threshold *Timer_{i,TH}* of the single inflation time is set for each system to complete inflation under the worst condition. If the single inflation time is not greater than the set time threshold, it is determined that the pneumatic system is normal. If the single inflation time is greater than the set time threshold, it is determined that the pneumatic system is leaking.

Therefore, by determining whether the air reservoir is leaking according to the single inflation time, the determination method is simple, and the determination result is accurate.

In some embodiments, the step S110 of determining whether there is an air leakage fault in the air reservoir of the pneumatic system with the first priority may further include a second determination process: a process of determining whether the air reservoir is leaking according to the number of the inflation request.

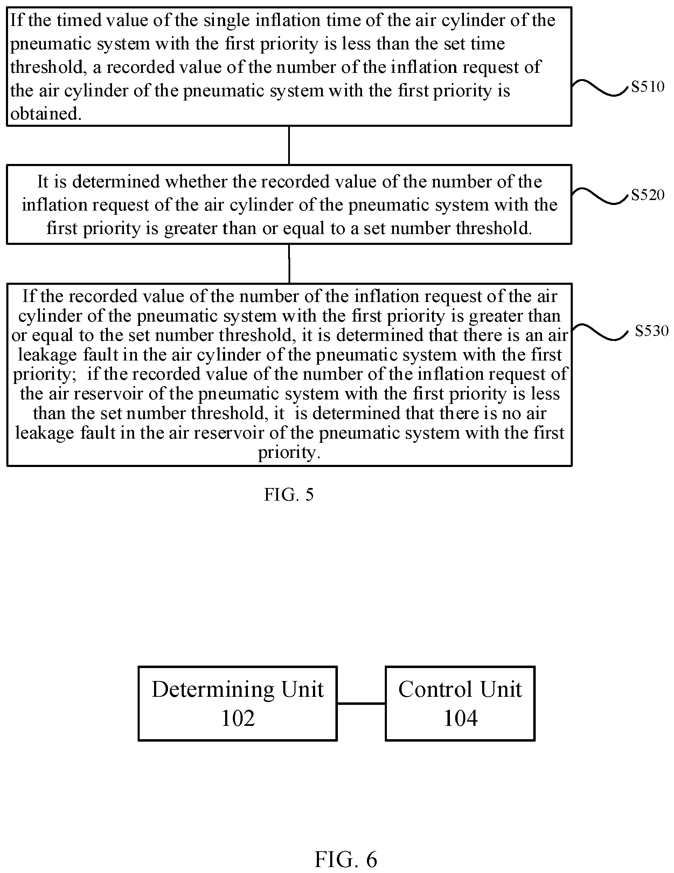

Referring to FIG. 5, a schematic flow diagram of determining whether the air reservoir is leaking based on the number of the inflation request according to an embodiment of the method of the present invention, a specific process of determining whether the air reservoir is leaking according to the number of the inflation request in the step S110 to be further illustrated may include step S510 to step S530.

At step S510, if the timed value of the single inflation time of the air reservoir of the pneumatic system with the first priority is less than the set time threshold, a recorded value of the number of the inflation request of the air reservoir of the pneumatic system with the first priority is obtained.

At step S520, it is determined whether the recorded value of the number of the inflation request of the air reservoir of the pneumatic system with the first priority is greater than or equal to a set number threshold.

At step S530, if the recorded value of the number of the inflation request of the air reservoir of the pneumatic system with the first priority is greater than or equal to the set number threshold, it is determined that there is an air leakage fault in the air reservoir of the pneumatic system with the first priority. If the recorded value of the number of the inflation request of the air reservoir of the pneumatic system with the first priority is less than the set number threshold, it is determined that there is no air leakage fault in the air reservoir of the pneumatic system with the first priority. For example, if the single inflation time meets requirements, then it is determined whether the number *Nᵢ* of the inflation request meets requirements. A number threshold *N_{i,TH}* of the inflation, which is required by each air reservoir under the worst condition during operation of the whole vehicle, is set. If the current accumulated number of the inflation request is not greater than the threshold, it is determined that the pneumatic system is normal. If the current accumulated number of the inflation request is greater than the threshold, it is determined that the pneumatic system is leaking, and a fault alarm *WARNINGᵢ=1* is set to remind a driver of the air leakage fault of the pneumatic system, while a process of turning on the air compressor continues, so as to ensure that the system is still operating.

For example, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected as soon as possible by combining with the priorities (for the safety of the whole vehicle) of the pneumatic systems and responding in sequence, and corresponding fault indications are provided for the responses based on different systems, which makes it convenient to locate the faults.

When the timed value of the single inflation time of the air reservoir of the pneumatic system with the first priority is less than the set time threshold, it is determined whether the air reservoir is leaking according to the number of the inflation request, thereby further improving the accuracy and reliability of determining the air leakage fault.

At step S120, if there is an air leakage fault in the air reservoir of the pneumatic system with the first priority, then a reminder that there is an air leakage fault in the air reservoir of the pneumatic system with the first priority is issued, while the air compressor is controlled to be on, so as to ensure the normal operation of the pneumatic systems of the vehicle. For example, if the pneumatic system is leaking, the fault alarm *WARNINGᵢ=1* is set to remind the driver of the air leakage fault of the pneumatic system, while a process of turning on the air compressor continues, so as to ensure that the system is still operating. The fault alarm indicator will not be canceled, and they are set respectively for the pneumatic systems with different priorities to indicate that the fault should be checked. If the fault always exits, it may cause the air compressor of the pneumatic systems to be overloaded, thus resulting in a shutdown due to the systemic fault, and affecting the normal operation of the whole pneumatic systems.

At step S130, if there is no air leakage fault in the air reservoir of the pneumatic system with the first priority, then it is determined whether there is an air leakage fault in an air reservoir of a pneumatic system with a second priority according to the priorities of the N pneumatic systems, and so on.

For example, an air leakage fault detection method for a pneumatic system, applicable for an outdoor unit of an air conditioner, may realize locating and detecting the fault in the air supply and air passage system for limited times, realize alarms for air leakage faults of a plurality of pneumatic systems, and realize alarms for air leakage faults of the pneumatic systems with multiple levels. This air leakage fault detection method improves the reliability of the whole pneumatic system, ensures operating states of the pneumatic systems with different priorities and guarantees the service life of the air compressor. Moreover, in the design scheme of the overall system and the control method, in addition to the use of existing hardware resources, as an integrated system of the air compressor, the added control unit for the air compressor unnecessarily communicates with and is unnecessarily interconnected to the system of the whole vehicle, thereby improving the independent working ability of the control unit greatly, reducing costs, and improving the transferability and the practicality.

Therefore, it is determined whether there is an air leakage fault in the air reservoirs of the pneumatic systems with corresponding priorities in sequence according to the priorities of the N pneumatic systems, and the air leakage fault of the air reservoir may be detected and located, thereby preventing the air compressor from operating in the case that the air reservoir leaks, and improving the reliability and the safety of the operation of the air compressor.

In an optional embodiment, before determining whether there is an air leakage fault in the air reservoir of the pneumatic system with the first priority, a process of initializing and receiving an inflation request is further included.

Referring to FIG. 2, a schematic flow diagram of processing an inflation request according to an embodiment of the method of the present invention, a specific process of processing an inflation request will be further illustrated and may include step S210 to step S230.

At step S210, the recorded value of the number of the inflation request and a timed value of the single inflation time of the air reservoir of each of the N pneumatic systems are initialized. For example, after the process is started, the counter and the timer are reset, and signal values of the pressure switches of the air reservoirs of different pneumatic systems are read in sequence. For the pneumatic system *i (i=1,2,3,4),* the initial value of the number of the inflation request is *Nᵢ=0.*

At step S220, it is determined whether the inflation request of the air reservoir of the pneumatic system with the first priority among the N pneumatic systems is received.

In some embodiments, referring to FIG. 3, a schematic flow diagram of determining whether an inflation request from an air reservoir of a pneumatic system with a first priority among N pneumatic systems is received according to an embodiment of the method of the present invention, a specific process of the step S220 of determining whether the inflation request of the air reservoir of the pneumatic system with the first priority among the N pneumatic systems is received will be further illustrated, and the process may include step S310 to step S330.

At step S310, a pressure signal of the air reservoir of the pneumatic system with the first priority is obtained, and it is determined whether the pressure signal is less than or equal to a lower limit of a set pressure range, or whether the pressure signal is greater than or equal to an upper limit of the set pressure range.

At step S320, if the pressure signal of the air reservoir of the pneumatic system with the first priority is less than or equal to the lower limit of the set pressure range of the air reservoir of the pneumatic system with the first priority, it is determined that the inflation request of the pneumatic system with the first priority is received, that is, it is determined that a start of the air compressor is required by the pneumatic system with the first priority, and the inflation passage of the air reservoir of the pneumatic system with the first priority is controlled to be opened.

At step S330, if the pressure signal of the air reservoir of the pneumatic system with the first priority is greater than or equal to the upper limit of the set pressure range of the air reservoir of the pneumatic system with the first priority, it is determined that no inflation request of the pneumatic system with the first priority is received. For example, it is determined that the start of the air compressor is not required by the pneumatic system with the first priority, and the inflation passage of the air reservoir of the pneumatic system with the first priority is controlled to be closed.

Therefore, by determining whether the inflation request of the air reservoir is received based on the pressure signal of the air reservoir, the determination of the inflation request of the air reservoir is convenient and reliable.

At step S230, if the inflation request of the air reservoir of the pneumatic system with the first priority is received, the air compressor is controlled to be on, so as to inflate the air reservoir of the pneumatic system with the first priority. At the same time, the recorded value of the number of the inflation request of the air reservoir of the pneumatic system with the first priority is accumulated by 1, and the single inflation time of the air reservoir of the pneumatic system with the first priority is timed. Thereafter, it is determined whether there is an air leakage fault in the air reservoir of the pneumatic system with the first priority. For example, when a pressure switch *Sᵢ=1,* the number of the inflation request is recorded as *Nᵢ+1,* and at the same time, a timer *Timerᵢ* for the single inflation starts.

Therefore, after the recorded value of the number of the inflation request and the single inflation time of the air reservoir are initialized, it is determined whether the inflation request of the air reservoir is received, and the number of the inflation request is recorded and the single inflation time is timed, thereby ensuring the accuracy of the recorded number of the inflation request and the timed value of the single inflation time, improving the accuracy and the reliability of detecting the air leakage fault of the air reservoir based on the recorded number of the inflation request and the timed value of the single inflation time.

In an optional embodiment, before determining whether there is an air leakage fault in the air reservoir of the pneumatic system with the second priority, the method may further include: if there is no air leakage fault in the air reservoir of the pneumatic system with the first priority, resetting the recorded number of the inflation request and the timed value of the single inflation time of the air reservoir of the pneumatic system with the first priority, then determining whether there is an air leakage fault in the air reservoir of the pneumatic system with the second priority, that is, continuing to determine whether an inflation request of the air reservoir of the pneumatic system with the second priority among the N pneumatic systems is received, so as to determine whether there is an air leakage fault in the air reservoir of the pneumatic system with the second priority, and so on.

For example, when a pressure switch *Sᵢ=0,* there is no inflation request, and the timer *Timerᵢ* for the single inflation of the pneumatic system is reset, and then processing an inflation request of the pressure switch of the next pneumatic system starts.

Specifically, it may be to determine whether the inflation request of the air reservoir of the pneumatic system with the first priority among the N pneumatic systems is received, where N is a natural number. If the inflation request of the air reservoir of the pneumatic system with the first priority is received, it is determined whether there is an air leakage fault in the air reservoir of the pneumatic system with the first priority. If there is an air leakage fault in the air reservoir of the pneumatic system with the first priority, a reminder that there is an air leakage fault in the air reservoir of the pneumatic system with the first priority is issued, and at the same time, the air compressor is controlled to be on, so as to ensure a normal operation of the whole pneumatic systems of the vehicle. If there is no air leakage fault in the air reservoir of the pneumatic system with the first priority, it is further determined whether the inflation request of the air reservoir of the pneumatic system with the second priority among the N pneumatic systems is received, so as to determine whether there is an air leakage fault in the air reservoir of the pneumatic system with the second priority, and so on.

Therefore, by resetting the recorded value of the number of the inflation request and the timed value of the single inflation time of the air reservoir in the case that there is no air leakage fault in the air reservoir of the pneumatic system with the corresponding priority, the accuracy of recording the number of the inflation request and timing the single inflation time may be beneficially ensured, thereby further improving the accuracy and reliability of detecting the air leakage fault in the air reservoir based on the recorded value of the number of the inflation request and the timed value of the single inflation time.

Verified by a large number of experiments, the technical solutions of the embodiments may improve the reliability and the safety of the air compressor by implementing locating and detecting the fault in the air supply and air passage system for finite times.

According to the embodiment of the present invention, a pneumatic control device corresponding to the pneumatic control method is also provided. Referring to FIG. 6, a schematic structural view showing a pneumatic control device according to an embodiment of the present invention, the pneumatic control device may include a determining unit 102 and a control unit 104.

In an optional embodiment, the determining unit 102 may be configured to determine whether there is an air leakage fault in the air reservoir of the pneumatic system with the first priority according to the priorities of the N pneumatic systems supplied by the air compressor of the vehicle. N is a natural number. For the specific functions and processing of the determining unit 102, please refer to the step S110. The pneumatic system with the first priority may be the pneumatic system with the highest priority among the N pneumatic systems, or the pneumatic system with the lower priority among the N pneumatic systems. For example, the priorities of the pressure switches of the service braking system, the parking braking system, the air suspension system, and the door control system may descend in sequence as follows: S₁> S₂> S₃> S₄. When the air compressor is turned on, the air reservoirs of all pneumatic systems will be inflated, so the inflation requests are judged in sequence in the logic of the air supply processing unit according to the priorities of the pneumatic systems.

In some embodiments, the determining unit 102 determines whether there is an air leakage fault in the air reservoir of the pneumatic system with the first priority, and may include any one of the following determination processes. A first determination process is a process of determining whether the air reservoir is leaking according to a single inflation time.

The determining unit 102 may be specifically configured to obtain a timed value of the single inflation time of the air reservoir of the pneumatic system with the first priority. For the specific functions and processing of the determining unit 102, please refer to step S410.

The determining unit 102 may be specifically configured to determine whether the timed value of the single inflation time of the air reservoir of the pneumatic system with the first priority is greater than or equal to a set time threshold. For the specific functions and processing of the determining unit 102, please refer to step S420.

The determining unit 102 may be specifically configured to determine that there is an air leakage fault in the air reservoir of the pneumatic system with the first priority if the timed value of the single inflation time of the air reservoir of the pneumatic system with the first priority is greater than or equal to the set time threshold. For the specific functions and processing of the determining unit 102, please refer to step S430. For example, a time threshold *Timer_{i,TH}* of the single inflation time is set for each system to complete inflation under the worst condition. If the single inflation time is not greater than the set time threshold, it is determined that the pneumatic system is normal. If the single inflation time is greater than the set time threshold, it is determined that the pneumatic system is leaking.

Therefore, by determining whether the air reservoir is leaking according to the single inflation time, the determination method is simple and the determination result is accurate.

In some embodiments, the determining unit 102 determining whether there is an air leakage fault in the air reservoir of the pneumatic system with the first priority may further include a second determination process: a process of determining whether the air reservoir is leaking according to the number of the inflation request.

The determining unit 102 may also be specifically configured to obtain a recorded value of the number of the inflation request of the air reservoir of the pneumatic system with the first priority, if the timed value of the single inflation time of the air reservoir of the pneumatic system with the first priority is less than the set time threshold. For the specific functions and processing of the determining unit 102, please refer to step S510.

The determining unit 102 may also be specifically configured to determine whether the recorded value of the number of the inflation request of the air reservoir of the pneumatic system with the first priority is greater than or equal to a set number threshold. For the specific functions and processing of the determining unit 102, please refer to step S520.

The determining unit 102 may also be specifically configured to determine that there is an air leakage fault in the air reservoir of the pneumatic system with the first priority if the recorded value of the number of the inflation request of the air reservoir of the pneumatic system with the first priority is greater than or equal to the set number threshold, and to determine that there is no air leakage fault in the air reservoir of the pneumatic system with the first priority if the recorded value of the number of the inflation request of the air reservoir of the pneumatic system with the first priority is less than the set number threshold. For the specific functions and processing of the determining unit 102, please refer to step S530. For example, if the single inflation time meets requirements, then it is determined whether the number *Nᵢ* of the inflation request meets requirements. A number threshold *N_{i,TH}* of the inflation, which is required by each air reservoir under the worst condition during operation of the whole vehicle, is set. If the current accumulated number of the inflation request is not greater than the threshold, it is determined that the pneumatic system is normal. If the current accumulated number of the inflation request is greater than the threshold, it is determined that the pneumatic system is leaking, and a fault alarm *WARNINGᵢ=1* is set to remind a driver of the air leakage fault of the pneumatic system, while a process of turning on the air compressor continues, so as to ensure that the system is still operating.

For example, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected as soon as possible by combining with the priorities (for the safety of the whole vehicle) of the pneumatic systems and responding in sequence, and corresponding fault indications are provided for the responses based on different systems, which makes it convenient to locate the faults.

Therefore, when the timed value of the single inflation time of the air reservoir of the pneumatic system with the first priority is less than the set time threshold, it is determined whether the air reservoir is leaking according to the number of the inflation request, thereby further improving the accuracy and reliability of determining the air leakage fault.

In an optional example, the control unit 104 may be configured to issue a reminder that there is an air leakage fault in the air reservoir of the pneumatic system with the first priority, if there is an air leakage fault in the air reservoir of the pneumatic system with the first priority, and control the air compressor to be on at the same time, so as to ensure the normal operation of the pneumatic systems of the whole vehicle. For the specific functions and processing of the control unit 104, please refer to step S120. For example, if the pneumatic system is leaking, the fault alarm *WARNINGᵢ=1* is set to remind the driver of the air leakage fault of the pneumatic system, while a process of turning on the air compressor continues, so as to ensure that the system is still operating. The fault alarm indicator will not be canceled, and they are set respectively for the pneumatic systems with different levels to indicate that the fault should be checked. If the fault always exits, it may cause the air compressor of the pneumatic system to be overloaded, thus resulting in a shutdown due to the systemic fault, and affecting the normal operation of the whole pneumatic systems.

In an optional embodiment, the determining unit 102 may also be configured to determine whether there is an air leakage fault in the air reservoir of the pneumatic system with the second priority according to the priorities of the N pneumatic systems, if there is no air leakage fault in the air reservoir of the pneumatic system with the first priority, and so on. For the specific functions and processing of the determining unit 102, please refer to step S 130.

For example, an air leakage fault detection device for a pneumatic system, applicable for an outdoor unit of an air conditioner, may realize locating and detecting the fault in the air supply and air passage system for finite times, realize alarms for air leakage faults of a plurality of pneumatic systems, and realize alarms for air leakage faults of the pneumatic systems with multiple levels. This air leakage fault detection method improves the reliability of the whole pneumatic system, ensures operating states of the pneumatic systems with different priorities and guarantees the service life of the air compressor. Moreover, in the design scheme of the overall system and the control method, in addition to the use of existing hardware resources, as an integrated system of the air compressor, the added control unit for the air compressor unnecessarily communicates with and is unnecessarily interconnected to the system of the whole vehicle, thereby improving the independent working ability of the control unit greatly, and improving the transferability and the practicality while reducing costs.

Therefore, it is determined whether there is an air leakage fault in the air reservoirs of the pneumatic systems with corresponding priorities in sequence according to the priorities of the N pneumatic systems, and the air leakage fault of the air reservoir may be detected and located, thereby preventing the air compressor from operating in the case that the air reservoir leaks, and improving the reliability and the safety of the operation of the air compressor.

In an optional embodiment, before determining whether there is an air leakage fault in the air reservoir of the pneumatic system with the first priority, a process of initializing and receiving an inflation request is further included.

The determining unit 102 may also be configured to initialize the recorded value of the number of the inflation request and the timed value of the single inflation time of the air reservoir of each of the N pneumatic systems. For the specific functions and processing of the determining unit 102, please refer to step S210. For example, after the process is started, the counter and the timer are reset, and signal values of the pressure switches of the air reservoirs of different pneumatic systems are read in sequence. For the pneumatic system *i (i=1,2,3,4),* the initial value of the number of the inflation request is *Nᵢ=0.*

The determining unit 102 may also be configured to determine whether the inflation request of the air reservoir of the pneumatic system with the first priority among the N pneumatic systems is received. For the specific functions and processing of the determining unit 102, please refer to step S220.

In some embodiments, the determining unit 102 determining whether the inflation request of the air reservoir of the pneumatic system with the first priority among the N pneumatic systems is received may include following schemes.

The determining unit 102 may also be specifically configured to obtain a pressure signal of the air reservoir of the pneumatic system with the first priority, and determine whether the pressure signal is less than or equal to a lower limit of a set pressure range, or whether the pressure signal is greater than or equal to an upper limit of the set pressure range. For the specific functions and processing of the determining unit 102, please refer to step S310.

The determining unit 102 may also be specifically configured to, if the pressure signal of the air reservoir of the pneumatic system with the first priority is less than or equal to the lower limit of the set pressure range of the air reservoir of the pneumatic system with the first priority, determine that the inflation request of the pneumatic system with the first priority is received, that is, determine that a start of the air compressor is required by the pneumatic system with the first priority, and control the inflation passage of the air reservoir of the pneumatic system with the first priority to be opened. For the specific functions and processing of the determining unit 102, please refer to step S320.

The determining unit 102 may also be specifically configured to, if the pressure signal of the air reservoir of the pneumatic system with the first priority is greater than or equal to the upper limit of the set pressure range of the air reservoir of the pneumatic system with the first priority, determine that no inflation request of the pneumatic system with the first priority is received, for example, determine that the start of the air compressor is not required by the pneumatic system with the first priority, and control the inflation passage of the air reservoir of the pneumatic system with the first priority to be closed. For the specific functions and processing of the determining unit 102, please refer to step S330.

Therefore, by determining whether the inflation request of the air reservoir is received based on the pressure signal of the air reservoir, the determination of the inflation request of the air reservoir is convenient and reliable.

The determining unit 102 may further be configured to, if the inflation request of the air reservoir of the pneumatic system with the first priority is received, control the air compressor to be on, so as to inflate the air reservoir of the pneumatic system with the first priority. At the same time, the recorded value of the number of the inflation request of the air reservoir of the pneumatic system with the first priority is accumulated by 1, and the single inflation time of the air reservoir of the pneumatic system with the first priority is timed. Thereafter, it is determined whether there is an air leakage fault in the air reservoir of the pneumatic system with the first priority. For the specific functions and processing of the determining unit 102, please refer to step S230. For example, when a pressure switch *Sᵢ=1,* the number of the inflation request is recorded to be *Nᵢ+1,* and at the same time, a timer *Timerᵢ* for the single inflation starts.

Therefore, after the recorded value of the number of the inflation request and the single inflation time of the air reservoir are initialized, it is determined whether the inflation request of the air reservoir is received, and the number of the inflation request is recorded and the single inflation time is timed, thereby ensuring the accuracy of the recorded number of the inflation request and the timed value of the single inflation time, improving the accuracy and the reliability of detecting the air leakage fault of the air reservoir based on the recorded number of the inflation request and the timed value of the single inflation time.

In an optional embodiment, before determining whether there is an air leakage fault in the air reservoir of the pneumatic system with the second priority, the determining unit 102 may be further configured to, if there is no air leakage fault in the air reservoir of the pneumatic system with the first priority, reset the recorded number of the inflation request and the timed value of the single inflation time of the air reservoir of the pneumatic system with the first priority, and then determine whether there is an air leakage fault in the air reservoir of the pneumatic system with the second priority, that is, continue to determine whether an inflation request of the air reservoir of the pneumatic system with the second priority among the N pneumatic systems is received, so as to determine whether there is an air leakage fault in the air reservoir of the pneumatic system with the second priority, and so on.

For example, when a pressure switch *Sᵢ=0,* there is no inflation request, and the timer *Timerᵢ* for the single inflation of the pneumatic system is reset, and then processing an inflation request of the pressure switch of the next pneumatic system starts.

Specifically, it may be to determine whether the inflation request of the air reservoir of the pneumatic system with the first priority among the N pneumatic systems is received, where N is a natural number. If the inflation request of the air reservoir of the pneumatic system with the first priority is received, it is determined whether there is an air leakage fault in the air reservoir of the pneumatic system with the first priority. If there is an air leakage fault in the air reservoir of the pneumatic system with the first priority, a reminder that there is an air leakage fault in the air reservoir of the pneumatic system with the first priority is issued, and at the same time, the air compressor is controlled to be on, so as to ensure a normal operation of the whole pneumatic systems of the vehicle. If there is no air leakage fault in the air reservoir of the pneumatic system with the first priority, it is further determined whether the inflation request of the air reservoir of the pneumatic system with the second priority among the N pneumatic systems is received, so as to determine whether there is an air leakage fault in the air reservoir of the pneumatic system with the second priority, and so on. Therefore, by resetting the recorded value of the number of the inflation request and the timed value of the single inflation time of the air reservoir in the case that there is no air leakage fault in the air reservoir of the pneumatic system with the corresponding priority, the accuracy of recording the number of the inflation request and timing the single inflation time may be beneficially ensured, thereby further improving the accuracy and reliability of detecting the air leakage fault in the air reservoir based on the recorded value of the number of the inflation request and the timed value of the single inflation time.

Since the processing and functions realized by the device of this embodiment basically correspond to the embodiments, the principles and the examples of the method shown in FIGS. 1 to 5. For those not described in detail in this embodiment, please refer to the relevant description in the embodiments above, and they are not repeated herein.

Verified by a large number of experiments, the technical solutions of the present invention may realize the detection of air leakage faults for the pneumatic systems by detecting air leakage faults of various pneumatic systems, thereby preventing the air compressor of the pneumatic systems from overload.

According to an embodiment of the present invention, a vehicle corresponding to the pneumatic control device is also provided. The vehicle may include the pneumatic control device described above.

In an optional embodiment, the solution of the present invention provides an air leakage fault detection method for pneumatic system, which is applicable for an outdoor unit of an air conditioner, may realize locating and detecting the faults in the air supply and air passage system for finite times, realize alarms for air leakage faults of a plurality of pneumatic systems, and realize alarms for air leakage faults of the pneumatic systems with multiple levels.

In some embodiments, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected as soon as possible by combining with the priorities (for the safety of the whole vehicle) of the pneumatic systems and responding in sequence, and corresponding fault indications are provided for the responses based on different systems, which makes it convenient to locate the faults. This air leakage fault detection method improves the reliability of the whole pneumatic system, ensures operating states of the pneumatic systems with different priorities and guarantees the service life of the air compressor. Moreover, in the design scheme of the overall system and the control method, in addition to the use of existing hardware resources, as an integrated system of the air compressor, the added control unit for the air compressor unnecessarily communicates with and is unnecessarily interconnected to the system of the whole vehicle, thereby improving the independent working ability of the control unit greatly, and improving the transferability and the practicality while reducing costs.

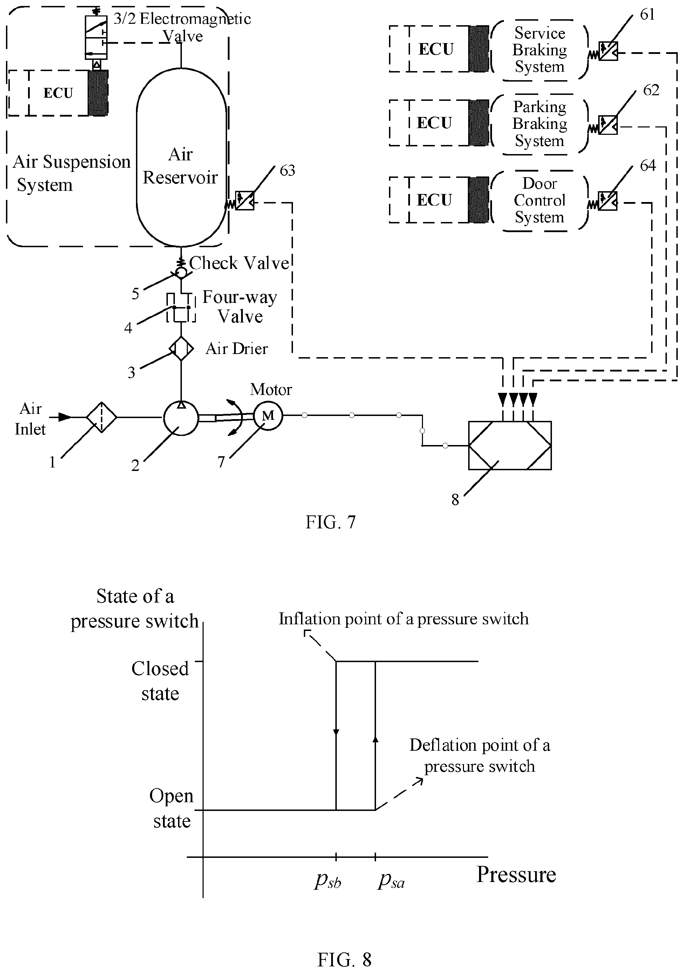

In an optional specific embodiment, referring to the examples shown in FIGS. 7 to 10, the specific implementation process of the scheme of the present invention will be illustrated.

FIG. 7 shows a compressed air supplying system including various pneumatic systems, which is an air supplying system applicable for one or more pneumatic systems. In FIG. 7, the air supplying system may include an air filter 1, an air compressor 2, an air drier 3, a four-way valve 4 (i.e. a four-way protecting valve), a check valve 5, a first pressure switch 61 (e.g. a pressure switch S₁), a second pressure switch 62 (e.g. a pressure switch S₂), a third pressure switch 63 (e.g. a pressure switch S₃), a fourth pressure switch 64 (e.g. a pressure switch S₄), a motor 7, and an air supply processing unit 8.

As shown in FIG. 7, after the four-way protecting valve, air supplying pipelines are provided to be connected to each pneumatic system, such as the air suspension system, the service braking system, the parking braking system, the door control system and so on. The air suspension system, as an example of one path of air supply, will be illustrated herein.

Air from an air inlet enters the air compressor 2 through the air filter. Driven by the motor 7, the air compressor 2 changes the low-pressure gas into the high-pressure gas. After passing through the air drier, the air is supplied to the air reservoir of the air suspension system and the air reservoirs of other pneumatic systems through the four-way valve 4 (that is, the four-way protecting valve).

The air supply processing unit 8 may be independent or integrated in a signal processing and control unit 104 of the air compressor 2. The air supply processing unit 8 receives the pressure switch signal of each air path system and records each inflation request of the pressure switch 61, 62, 63, 64. The pressure switch 61, 62, 63, 64 also refers to a pressure relay, a pressure control switch, or a pressure sensor, etc.

FIG. 8 shows the switching logic of the pressure switch. In FIG. 8, the abscissa represents the air pressure, and the ordinate represents the state of the pressure switch 61, 62, 63, 64. The switching air pressure *pₛₐ* (also called a deflation point of the pressure switch) corresponds to a turning point from a low pressure to a high pressure. After the pressure of the air reservoir is higher than the switching air pressure *pₛₐ,* the pressure switch 61, 62, 63, 64 is in a closed state, that is, the air compressor 2 is not required to inflate the air reservoir. The switching air pressure *p_{sb}* (also called an inflation point of the pressure switch 61, 62, 63, 64) corresponds to a turning point from the high pressure to the low pressure. After the pressure of the air reservoir is lower than the switching air pressure *p_{sb},* the pressure switch 61, 62, 63, 64 is in an open state.

As shown in FIG. 8, the pressure switch has the function of maintaining a certain pressure of the air reservoir (the certain pressure is ranged between two switching air pressures such as between the switching air pressure *p_{sb}* and the switching air pressure *pₛₐ*)*.* When the air pressure of the air reservoir is lower than the switching air pressure *p_{sb},* the switch signal is *Sᵢ=1,* the air compressor 2 needs to be turned on to inflate the air reservoir. When the air pressure of the air reservoir is higher than the switching pressure *pₛₐ,* the switch signal is *Sᵢ=0,* and the air compressor 2 needs to be turned off to stop inflating. The switching air pressure *p_{sb}* meets the operation requirements for the minimum air pressure, and is also the inflation point indicating that the inflation is required. Each time the inflation is turned on, the number of inflations will be recorded and accumulated.

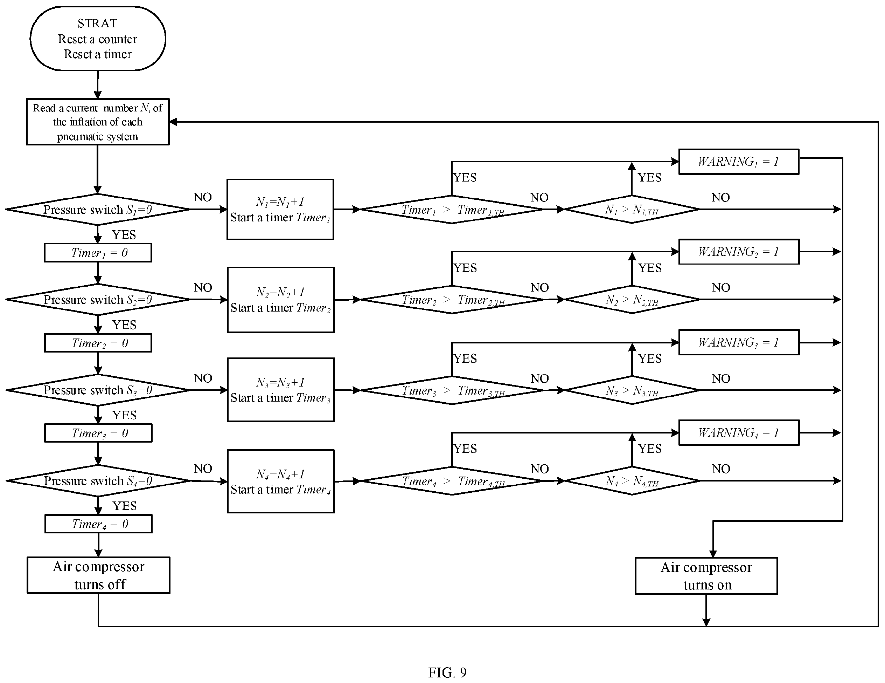

As shown in FIG. 9, after the process starts, the air supply processing unit 8 resets the counter and the timer, and sequentially reads the signal values of the pressure switches 61, 62, 63, 64 of the air reservoirs of different pneumatic systems.

Specifically, for the pneumatic system *i (i=1,2,3,4),* the initial value *Nᵢ=0.* When the pressure switch *Sᵢ=1,* the number of the inflation request is recorded as *Nᵢ+1,* and at the same time, the timer *Timerᵢ* for the single inflation starts. A time threshold *Timer_{i,TH}* of the single inflation time is set for each system to complete inflation under the worst condition. If the single inflation time is not greater than the set time threshold, it is determined that the pneumatic system is normal. If the single inflation time is greater than the set time threshold, it is determined that the pneumatic system is leaking, and a fault alarm *WARNINGᵢ=1* is set to remind the driver of the air leakage fault of the pneumatic system, while a process of turning on the air compressor 2 continues, so as to ensure that the system is still operating

In some implementations, if the single inflation time meets requirements, then it is further determined whether the number *Nᵢ* of the inflation request meets requirements. A number threshold *N_{i,TH}* of the inflation, which is required by each air reservoir under the worst condition during operation of the whole vehicle, is set. If the current accumulated number of the inflation request is not greater than the threshold, it is determined that the pneumatic system is normal. If the number of the inflation request is greater than the threshold, it is determined that the pneumatic system is leaking, and a fault alarm *WARNINGᵢ=1* is set to remind the driver of the air leakage fault of the pneumatic system, while a process of turning on the air compressor 2 continues, so as to ensure that the system is still operating.

In some embodiments, if the pressure switch *Sᵢ=0,* then no inflation is requested, the timer *Timerᵢ* for the single inflation of the pneumatic system is reset, and start processing the inflation request of the pressure switch of the next pneumatic system.

Where, the fault alarm indicator will not be canceled, and they are set respectively for the pneumatic systems with different levels to indicate that the fault should be checked. If the fault always exits, it may cause the air compressor of the pneumatic systems to be overloaded, thus resulting in a shutdown due to the systemic fault, and affecting the normal operation of the whole pneumatic systems.

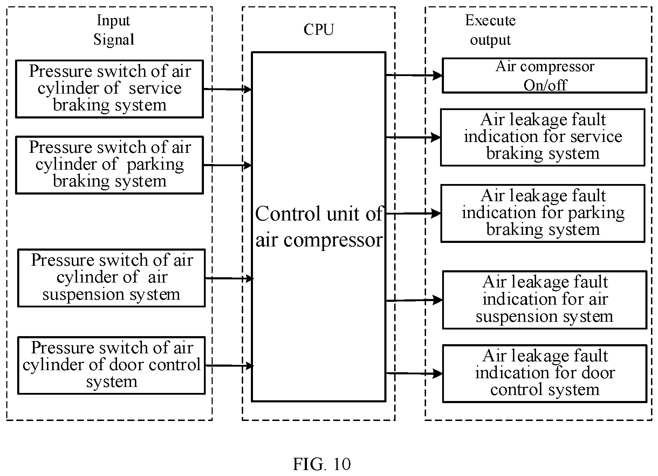

As shown in FIG. 10, the air supply processing unit 8 is divided into three parts. A first part is a signal input part, a second part is a central processing part, and a third part is an execution output part. The input part only needs information of four pressure switches, the counter and the timer of the control unit 104 processes the control logic, and outputs commands for controlling the air compressor 2 to turn on or turn off, and outputs the fault indications for each pneumatic system.

Specifically, the priorities of the pressure switches of the service braking system, the parking braking system, the air suspension system, and the door control system may descend in sequence as follows: S1> S2> S3> S4. When the air compressor 2 is turned on, the air reservoirs of all pneumatic systems will be inflated, so the inflation requests are judged in sequence in the logic of the air supply processing unit according to the priorities of the pneumatic systems.

Since the processing and the functions realized by the vehicle of this embodiment basically correspond to the embodiment, principle and example of the device shown in FIG. 6. For those not described in detail in this embodiment, please refer to the relevant description in the embodiments above, and they are not repeated herein.

Verified by a large number of experiments, in the technical solutions of the present invention, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage faults of the pneumatic systems may be detected, and the detection is accurate and reliable.

According to the embodiment of the present invention, a computer-readable storage medium corresponding to the pneumatic control method is also provided. The computer-readable storage medium may include a plurality of instructions stored in the computer-readable storage medium; the plurality of instructions are configured to be loaded by a processor to execute the pneumatic control method above.

Since the processing and the functions realized by the computer-readable storage medium of this embodiment basically correspond to the embodiments, the principles and the examples of the method shown in FIGS. 1 to 5. For those not described in detail in this embodiment, please refer to the relevant description in the embodiments above, and they are not repeated herein.

Verified by a large number of experiments, by using the technical solution of the present invention, the air leakage faults of the pneumatic systems may be detected as soon as possible by combining with the priorities of the pneumatic systems and responding in sequence, and corresponding fault indications are provided for the responses based on different systems, which makes it convenient to locate the faults and may further improve the accuracy and efficiency of the fault detection.

According to the embodiments of the present invention, a vehicle corresponding to the pneumatic control method is further provided. The vehicle may include a processor configured to execute a plurality of instructions, and a memory configured to store a plurality of instructions. The plurality of instructions are configured to be stored in the memory and loaded by the processor to execute the pneumatic control method described above.

Since the processing and the functions realized by the vehicle of this embodiment basically correspond to the embodiments, principles and examples of the method shown in FIGS. 1 to 5. For those not described in detail in this embodiment, please refer to the relevant description in the embodiments above, and they are not repeated herein.

Verified by a large number of experiments, in the technical solutions of the present invention, the air leakage fault detection is performed for each pneumatic system according to the time threshold of the single inflation limit time of each pneumatic system supplied with air by the air compressor, and the limit number threshold of the inflation of the pneumatic system from the whole vehicle's starting to the vehicle's stopping, and by means of the timing and counting schemes of the pressure switch of the air reservoir. Moreover, the air leakage fault of the pneumatic system may be detected as soon as possible by combining with the priorities of the pneumatic systems and responding in sequence, and corresponding fault indications are provided for the responses based on different systems, which makes it convenient to locate the faults and the cost low.

## Claims

1. A pneumatic control method, the method comprising:
obtaining a timed value of a single inflation time of an air reservoir of a pneumatic system with a first priority, according to priorities of N pneumatic systems supplied with air by an air compressor of a vehicle, wherein N is a natural number;
determining whether the timed value of the single inflation time of the air reservoir of the pneumatic system with the first priority is greater than or equal to a set time threshold;
if the timed value of the single inflation time of the air reservoir of the pneumatic system with the first priority is less than the set time threshold, obtaining a recorded value of a number of an inflation request of the air reservoir of the pneumatic system with the first priority;
determining whether the recorded value of the number of the inflation request of the air reservoir of the pneumatic system with the first priority is greater than or equal to a set number threshold;
if the recorded value of the number of the inflation request of the air reservoir of the pneumatic system with the first priority is greater than or equal to the set number threshold, determining that there is an air leakage fault in the air reservoir of the pneumatic system with the first priority; and if the recorded value of the number of the inflation request of the air reservoir of the pneumatic system with the first priority is less than the set number threshold, determining that there is no air leakage fault in the air reservoir of the pneumatic system with the first priority;
if the timed value of the single inflation time of the air reservoir of the pneumatic system with the first priority is greater than or equal to the set time threshold, determining that there is an air leakage fault in the air reservoir of the pneumatic system with the first priority;
if there is an air leakage fault in the air reservoir of the pneumatic system with the first priority, issuing a reminder that there is an air leakage fault in the air reservoir of the pneumatic system with the first priority, and controlling the air compressor (2) to be on, to ensure a normal operation of the pneumatic system of the vehicle; and
if there is no air leakage fault in the air reservoir of the pneumatic system with the first priority, determining whether there is an air leakage fault in an air reservoir of a pneumatic system with a second priority according to the priorities of the N pneumatic systems.

2. The method according to claim 1, further comprising:
initializing the recorded value of the number of the inflation request and the timed value of the single inflation time of the air reservoir of each of the N pneumatic systems;
determining whether the inflation request of the air reservoir of the pneumatic system with the first priority among the N pneumatic systems is received;
if the inflation request of the air reservoir of the pneumatic system with the first priority is received, controlling the air compressor (2) to turn on to inflate the air reservoir of the pneumatic system with the first priority; while accumulating the recorded value of the number of the inflation request of the air reservoir of the pneumatic system with the first priority by 1, and timing the single inflation time of the air reservoir of the pneumatic system with the first priority; thereafter, determining whether there is an air leakage fault in the air reservoir of the pneumatic system with the first priority.

3. The method according to claim 2, wherein the determining whether the inflation request of the air reservoir of the pneumatic system with the first priority among the N pneumatic systems is received comprises:
obtaining a pressure signal of the air reservoir of the pneumatic system with the first priority, and determining whether the pressure signal is less than or equal to a lower limit of a set pressure range, or whether the pressure signal is greater than or equal to an upper limit of the set pressure range;
if the pressure signal of the air reservoir of the pneumatic system with the first priority is less than or equal to the lower limit of the set pressure range of the air reservoir of the pneumatic system with the first priority, determining that the inflation request of the pneumatic system with the first priority is received;
if the pressure signal of the air reservoir of the pneumatic system with the first priority is greater than or equal to the upper limit of the set pressure range of the air reservoir of the pneumatic system with the first priority, determining that no inflation request of the pneumatic system with the first priority is received.

4. The method according to claim 1, further comprising:
if there is no air leakage fault in the air reservoir of the pneumatic system with the first priority, resetting a recorded number of the inflation request and the timed value of the single inflation time of the air reservoir of the pneumatic system with the first priority, then determining whether there is an air leakage fault in the air reservoir of the pneumatic system with the second priority.

5. A pneumatic control device, the device comprising:
a determining unit (102), configured to: obtain a timed value of a single inflation time of an air reservoir of a pneumatic system with a first priority according to priorities of N pneumatic systems supplied with air by an air compressor (2) of a vehicle,
determine whether the timed value of the single inflation time of the air reservoir of the pneumatic system with the first priority is greater than or equal to a set time threshold; if the timed value of the single inflation time of the air reservoir of the pneumatic system with the first priority is less than the set time threshold, obtain a recorded value of a number of an inflation request of the air reservoir of the pneumatic system with the first priority; determine whether the recorded value of the number of the inflation request of the air reservoir of the pneumatic system with the first priority is greater than or equal to a set number threshold; if the recorded value of the number of the inflation request of the air reservoir of the pneumatic system with the first priority is greater than or equal to the set number threshold, determine that there is an air leakage fault in the air reservoir of the pneumatic system with the first priority; and if the recorded value of the number of the inflation request of the air reservoir of the pneumatic system with the first priority is less than the set number threshold, determine that there is no air leakage fault in the air reservoir of the pneumatic system with the first priority; if the timed value of the single inflation time of the air reservoir of the pneumatic system with the first priority is greater than or equal to the set time threshold, determine that there is an air leakage fault in the air reservoir of the pneumatic system with the first priority, wherein N is a natural number; and
a control unit (104), configured to, if there is an air leakage fault in the air reservoir of the pneumatic system with the first priority, issue a reminder that there is an air leakage fault in the air reservoir of the pneumatic system with the first priority, and control the air compressor (2) to be on, to ensure a normal operation of the pneumatic system of the vehicle;
wherein the determining unit (102) is further configured to, if there is no air leakage fault in the air reservoir of the pneumatic system with the first priority, determine whether there is an air leakage fault in an air reservoir of a pneumatic system with a second priority according to the priorities of the N pneumatic systems.

6. The device according to claim 5, wherein the determining unit (102) is further configured to:
initialize the recorded value of the number of the inflation request and the timed value of a single inflation time of an air reservoir of each of the N pneumatic systems;
determine whether the inflation request of the air reservoir of the pneumatic system with the first priority among the N pneumatic systems is received; and
if the inflation request of the air reservoir of the pneumatic system with the first priority is received, control the air compressor to turn on to inflate the air reservoir of the pneumatic system with the first priority, accumulate the recorded value of the number of the inflation request of the air reservoir of the pneumatic system with the first priority by 1, and time the single inflation time of the air reservoir of the pneumatic system with the first priority, thereafter, determine whether there is an air leakage fault in the air reservoir of the pneumatic system with the first priority.

7. The device according to claim 6, wherein the determining unit (102), configured to determine whether the inflation request of the air reservoir of the pneumatic system with the first priority among the N pneumatic systems is received, is the determining unit (102) configured to:
obtain a pressure signal of the air reservoir of the pneumatic system with the first priority, and determine whether the pressure signal is less than or equal to a lower limit of a set pressure range, or whether the pressure signal is greater than or equal to an upper limit of the set pressure range;
if the pressure signal of the air reservoir of the pneumatic system with the first priority is less than or equal to the lower limit of the set pressure range of the air reservoir of the pneumatic system with the first priority, determine that the inflation request of the pneumatic system with the first priority is received;
if the pressure signal of the air reservoir of the pneumatic system with the first priority is greater than or equal to the upper limit of the set pressure range of the air reservoir of the pneumatic system with the first priority, determine that no inflation request of the pneumatic system with the first priority is received.

8. The device according to claim 5, wherein the determining unit (102) is further configured to, if there is no air leakage fault in the air reservoir of the pneumatic system with the first priority, reset the recorded value of the number of the inflation request and the timed value of the single inflation time of the air reservoir of the pneumatic system with the first priority, then determine whether there is an air leakage fault in the air reservoir of the pneumatic system with the second priority.

9. A vehicle comprising the pneumatic control device according to any one of claims 4-8.

10. A vehicle comprising:
a processor, configured to execute a plurality of instructions;
a memory, configured to store the plurality of instructions;
wherein, the plurality of instructions are configured to be stored by the memory and to be loaded by the processor to execute the pneumatic control method according to any one of claims 1-4.

11. A computer-readable storage medium, storing a plurality of instructions, the plurality of instructions configured to be loaded by a processor to execute the pneumatic control method according to any one of claims 1-4.

## Patentansprüche

1. Pneumatisches Steuerverfahren, wobei das Verfahren Folgendes umfasst:
Erhalten eines getimten Werts einer einzelnen Befüllzeit eines Luftreservoirs eines pneumatischen Systems mit einer ersten Priorität gemäß Prioritäten von N pneumatischen Systemen, die von einem Luftkompressor eines Fahrzeugs mit Luft versorgt werden, wobei N eine natürliche Zahl ist;
Bestimmen, ob der getimte Wert der einzelnen Befüllzeit des Luftreservoirs des pneumatischen Systems mit der ersten Priorität größer oder gleich einer festgelegten Zeitschwelle ist;
falls der getimte Wert der einzelnen Befüllzeit des Luftreservoirs des pneumatischen Systems mit der ersten Priorität kleiner als die festgelegte Zeitschwelle ist, Erhalten eines aufgezeichneten Werts einer Anzahl einer Befüllanforderung des Luftreservoirs des pneumatischen Systems mit der ersten Priorität;
Bestimmen, ob der aufgezeichnete Wert der Anzahl der Befüllanforderung des Luftreservoirs des pneumatischen Systems mit der ersten Priorität größer oder gleich einer festgelegten Anzahlschwelle ist;
falls der aufgezeichnete Wert der Anzahl der Befüllanforderung des Luftreservoirs des pneumatischen Systems mit der ersten Priorität größer oder gleich der festgelegten Anzahlschwelle ist, Bestimmen, dass ein Luftleckagefehler in dem Luftreservoir des pneumatischen Systems mit der ersten Priorität vorliegt; und falls der aufgezeichnete Wert der Anzahl der Befüllanforderung des Luftreservoirs des pneumatischen Systems mit der ersten Priorität kleiner als die festgelegte Anzahlschwelle ist, Bestimmen, dass kein Luftleckagefehler in dem Luftreservoir des pneumatischen Systems mit der ersten Priorität vorliegt;
falls der getimte Wert der einzelnen Befüllzeit des Luftreservoirs des pneumatischen Systems mit der ersten Priorität größer oder gleich der festgelegten Zeitschwelle ist, Bestimmen, dass ein Luftleckagefehler in dem Luftreservoir des pneumatischen Systems mit der ersten Priorität vorliegt;
falls ein Luftleckagefehler im Luftreservoir des pneumatischen Systems mit der ersten Priorität vorliegt, Ausgeben einer Erinnerung daran, dass ein Luftleckagefehler im Luftreservoir des pneumatischen Systems mit der ersten Priorität vorliegt, und Steuern des Luftkompressors (2), sodass er eingeschaltet ist, um einen normalen Betrieb des pneumatischen Systems des Fahrzeugs sicherzustellen; und
falls kein Luftleckagefehler im Luftreservoir des pneumatischen Systems mit der ersten Priorität vorliegt, Bestimmen, ob ein Luftleckagefehler in einem Luftreservoir eines pneumatischen Systems mit einer zweiten Priorität gemäß den Prioritäten der N pneumatischen Systeme vorliegt.

2. Verfahren nach Anspruch 1, ferner umfassend:
Initialisieren des aufgezeichneten Werts der Anzahl der Befüllanforderung und des getimten Werts der einzelnen Befüllzeit des Luftreservoirs jedes der N pneumatischen Systeme;
Bestimmen, ob die Befüllanforderung des Luftreservoirs des pneumatischen Systems mit der ersten Priorität unter den N pneumatischen Systemen empfangen wird;
falls die Befüllanforderung des Luftreservoirs des pneumatischen Systems mit der ersten Priorität empfangen wird, Steuern des Luftkompressors (2) zum Einschalten, um das Luftreservoir des pneumatischen Systems mit der ersten Priorität zu befüllen; währenddessen Kumulieren des aufgezeichneten Werts der Anzahl der Befüllanforderung des Luftreservoirs des pneumatischen Systems mit der ersten Priorität um 1 und Timen der einzelnen Befüllzeit des Luftreservoirs des pneumatischen Systems mit der ersten Priorität; danach Bestimmen, ob ein Luftleckagefehler im Luftreservoir des pneumatischen Systems mit der ersten Priorität vorliegt.

3. Verfahren nach Anspruch 2, wobei das Bestimmen, ob die Befüllanforderung des Luftreservoirs des pneumatischen Systems mit der ersten Priorität unter den N pneumatischen Systemen empfangen wird, Folgendes umfasst:
Erhalten eines Drucksignals des Luftreservoirs des pneumatischen Systems mit der ersten Priorität und Bestimmen, ob das Drucksignal kleiner oder gleich einer unteren Grenze eines festgelegten Druckbereichs ist oder ob das Drucksignal größer oder gleich einer oberen Grenze des festgelegten Druckbereichs ist;
falls das Drucksignal des Luftreservoirs des pneumatischen Systems mit der ersten Priorität kleiner oder gleich der unteren Grenze des festgelegten Druckbereichs des Luftreservoirs des pneumatischen Systems mit der ersten Priorität ist, Bestimmen, dass die Befüllanforderung des pneumatischen Systems mit der ersten Priorität empfangen wird;
falls das Drucksignal des Luftreservoirs des pneumatischen Systems mit der ersten Priorität größer oder gleich der oberen Grenze des festgelegten Druckbereichs des Luftreservoirs des pneumatischen Systems mit der ersten Priorität ist, Bestimmen, dass keine Befüllanforderung des pneumatischen Systems mit der ersten Priorität empfangen wird.

4. Verfahren nach Anspruch 1, ferner umfassend:
falls kein Luftleckagefehler im Luftreservoir des pneumatischen Systems mit der ersten Priorität vorliegt, Zurücksetzen einer aufgezeichneten Anzahl der Befüllanforderung und des getimten Werts der einzelnen Befüllzeit des Luftreservoirs des pneumatischen Systems mit der ersten Priorität, dann Bestimmen, ob ein Luftleckagefehler im Luftreservoir des pneumatischen Systems mit der zweiten Priorität vorliegt.

5. Pneumatische Steuervorrichtung, wobei die Vorrichtung Folgendes umfasst:
eine Bestimmungseinheit (102), die ausgelegt ist zum: Erhalten eines getimten Werts einer einzelnen Befüllzeit eines Luftreservoirs eines pneumatischen Systems mit einer ersten Priorität gemäß Prioritäten von N pneumatischen Systemen, die von einem Luftkompressor (2) eines Fahrzeugs mit Luft versorgt werden, Bestimmen, ob der getimte Wert der einzelnen Befüllzeit des Luftreservoirs des pneumatischen Systems mit der ersten Priorität größer oder gleich einer festgelegten Zeitschwelle ist; falls der getimte Wert der einzelnen Befüllzeit des Luftreservoirs des pneumatischen Systems mit der ersten Priorität kleiner als die festgelegte Zeitschwelle ist, Erhalten eines aufgezeichneten Werts einer Anzahl einer Befüllanforderung des Luftreservoirs des pneumatischen Systems mit der ersten Priorität; Bestimmen, ob der aufgezeichnete Wert der Anzahl der Befüllanforderung des Luftreservoirs des pneumatischen Systems mit der ersten Priorität größer oder gleich einer festgelegten Anzahlschwelle ist; falls der aufgezeichnete Wert der Anzahl der Befüllanforderung des Luftreservoirs des pneumatischen Systems mit der ersten Priorität größer oder gleich der festgelegten Anzahlschwelle ist, Bestimmen, dass ein Luftleckagefehler im Luftreservoir des pneumatischen Systems mit der ersten Priorität vorliegt; und falls der aufgezeichnete Wert der Anzahl der Befüllanforderung des Luftreservoirs des pneumatischen Systems mit der ersten Priorität kleiner als die festgelegte Anzahlschwelle ist, Bestimmen, dass kein Luftleckagefehler im Luftreservoir des pneumatischen Systems mit der ersten Priorität vorliegt; falls der getimte Wert der einzelnen Befüllzeit des Luftreservoirs des pneumatischen Systems mit der ersten Priorität größer oder gleich der festgelegten Zeitschwelle ist, Bestimmen, dass ein Luftleckagefehler in dem Luftreservoir des pneumatischen Systems mit der ersten Priorität vorliegt, wobei N eine natürliche Zahl ist; und
eine Steuereinheit (104), die ausgelegt ist zum, falls ein Luftleckagefehler im Luftreservoir des pneumatischen Systems mit der ersten Priorität vorliegt, Ausgeben einer Erinnerung daran, dass ein Luftleckagefehler im Luftreservoir des pneumatischen Systems mit der ersten Priorität vorliegt, und Steuern des Luftkompressors (2), sodass er eingeschaltet ist, um einen normalen Betrieb des pneumatischen Systems des Fahrzeugs sicherzustellen; wobei die Bestimmungseinheit (102) ferner ausgelegt ist zum, falls kein Luftleckagefehler im Luftreservoir des pneumatischen Systems mit der ersten Priorität vorliegt, Bestimmen, ob ein Luftleckagefehler in einem Luftreservoir eines pneumatischen Systems mit einer zweiten Priorität gemäß den Prioritäten der N pneumatischen Systeme vorliegt.

6. Vorrichtung nach Anspruch 5, wobei die Bestimmungseinheit (102) ferner ausgelegt ist zum:
Initialisieren des aufgezeichneten Werts der Anzahl der Befüllanforderung und des getimten Werts einer einzelnen Befüllzeit eines Luftreservoirs jedes der N pneumatischen Systeme;
Bestimmen, ob die Befüllanforderung des Luftreservoirs des pneumatischen Systems mit der ersten Priorität unter den N pneumatischen Systemen empfangen wird; und
falls die Befüllanforderung des Luftreservoirs des pneumatischen Systems mit der ersten Priorität empfangen wird, Steuern des Luftkompressors zum Einschalten, um das Luftreservoir des pneumatischen Systems mit der ersten Priorität zu befüllen, Kumulieren des aufgezeichneten Werts der Anzahl der Befüllanforderung des Luftreservoirs des pneumatischen Systems mit der ersten Priorität um 1 und Timen der einzelnen Befüllzeit des Luftreservoirs des pneumatischen Systems mit der ersten Priorität, danach Bestimmen, ob ein Luftleckagefehler im Luftreservoir des pneumatischen Systems mit der ersten Priorität vorliegt.

7. Vorrichtung nach Anspruch 6, wobei die Bestimmungseinheit (102), die ausgelegt ist zum Bestimmen, ob die Befüllanforderung des Luftreservoirs des pneumatischen Systems mit der ersten Priorität unter den N pneumatischen Systemen empfangen wird, die Bestimmungseinheit (102) ist, die ausgelegt ist zum:
Erhalten eines Drucksignals des Luftreservoirs des pneumatischen Systems mit der ersten Priorität und Bestimmen, ob das Drucksignal kleiner oder gleich einer unteren Grenze eines festgelegten Druckbereichs ist oder ob das Drucksignal größer oder gleich einer oberen Grenze des festgelegten Druckbereichs ist;
falls das Drucksignal des Luftreservoirs des pneumatischen Systems mit der ersten Priorität kleiner oder gleich der unteren Grenze des festgelegten Druckbereichs des Luftreservoirs des pneumatischen Systems mit der ersten Priorität ist, Bestimmen, dass die Befüllanforderung des pneumatischen Systems mit der ersten Priorität empfangen wird;
falls das Drucksignal des Luftreservoirs des pneumatischen Systems mit der ersten Priorität größer oder gleich der oberen Grenze des festgelegten Druckbereichs des Luftreservoirs des pneumatischen Systems mit der ersten Priorität ist, Bestimmen, dass keine Befüllanforderung des pneumatischen Systems mit der ersten Priorität empfangen wird.

8. Vorrichtung nach Anspruch 5, wobei die Bestimmungseinheit (102) ferner ausgelegt ist zum, falls kein Luftleckagefehler im Luftreservoir des pneumatischen Systems mit der ersten Priorität vorliegt, Zurücksetzen des aufgezeichneten Werts der Anzahl der Befüllanforderung und des getimten Werts der einzelnen Befüllzeit des Luftreservoirs des pneumatischen Systems mit der ersten Priorität, dann Bestimmen, ob ein Luftleckagefehler im Luftreservoir des pneumatischen Systems mit der zweiten Priorität vorliegt.

9. Fahrzeug, das die pneumatische Steuervorrichtung nach einem der Ansprüche 4-8 umfasst.

10. Fahrzeug, das Folgendes umfasst:
einen Prozessor, der dazu ausgelegt ist, mehrere Anweisungen auszuführen;
einen Speicher, der dazu ausgelegt ist, die mehreren Anweisungen zu speichern;
wobei die mehreren Anweisungen dazu ausgelegt sind, durch den Speicher gespeichert zu werden und durch den Prozessor geladen zu werden, um das pneumatische Steuerverfahren nach einem der Ansprüche 1-4 auszuführen.

11. Computerlesbares Speichermedium, das mehrere Anweisungen speichert, wobei die mehreren Anweisungen dazu ausgelegt sind, durch einen Prozessor geladen zu werden, um das pneumatische Steuerverfahren nach einem der Ansprüche 1-4 auszuführen.

## Revendications

1. Procédé de commande pneumatique, le procédé comprenant les faits suivants :
obtenir une valeur mesurée en temps d'un temps de gonflement unique d'un réservoir d'air d'un système pneumatique avec une première priorité, selon des priorités de N systèmes pneumatiques alimentés en air par un compresseur d'air d'un véhicule, dans lequel N est un nombre entier naturel ;
déterminer si la valeur mesurée en temps du temps de gonflement unique du réservoir d'air du système pneumatique avec la première priorité est supérieure ou égale à un seuil de temps défini ;
si la valeur mesurée en temps du temps de gonflement unique du réservoir d'air du système pneumatique avec la première priorité est inférieure au seuil de temps défini, obtenir une valeur enregistrée d'un nombre d'une demande de gonflement du réservoir d'air du système pneumatique avec la première priorité ;
déterminer si la valeur enregistrée du nombre de la demande de gonflement du réservoir d'air du système pneumatique avec la première priorité est supérieure ou égale à un seuil de nombre défini ;
si la valeur enregistrée du nombre de la demande de gonflement du réservoir d'air du système pneumatique avec la première priorité est supérieure ou égale au seuil de nombre défini, déterminer qu'il y a une défaillance avec fuite d'air dans le réservoir d'air du système pneumatique avec la première priorité ; et, si la valeur enregistrée du nombre de la demande de gonflement du réservoir d'air du système pneumatique avec la première priorité est inférieure au seuil de nombre défini, déterminer qu'il y n'a aucune défaillance avec fuite d'air dans le réservoir d'air du système pneumatique avec la première priorité ;
si la valeur mesurée en temps du temps de gonflement unique du réservoir d'air du système pneumatique avec la première priorité est supérieure ou égale au seuil de temps défini, déterminer qu'il y a une défaillance avec fuite d'air dans le réservoir d'air du système pneumatique avec la première priorité ;
s'il y a une défaillance avec fuite d'air dans le réservoir d'air du système pneumatique avec la première priorité, émettre un rappel qu'il y a une défaillance avec fuite d'air dans le réservoir d'air du système pneumatique avec la première priorité, et commander le compresseur d'air (2) pour qu'il soit allumé, pour garantir un fonctionnement normal du système pneumatique du véhicule ; et
s'il n'y a aucune défaillance avec fuite d'air dans le réservoir d'air du système pneumatique avec la première priorité, déterminer s'il y a une défaillance avec fuite d'air dans un réservoir d'air d'un système pneumatique avec une seconde priorité selon les priorités des N systèmes pneumatiques.

2. Procédé selon la revendication 1, comprenant en outre :
initialiser la valeur enregistrée du nombre de la demande de gonflement et la valeur mesurée en temps du temps de gonflement unique du réservoir d'air de chacun des N systèmes pneumatiques ;
déterminer si la demande de gonflement du réservoir d'air du système pneumatique avec la première priorité parmi les N systèmes pneumatiques est reçue ;
si la demande de gonflement du réservoir d'air du système pneumatique avec la première priorité est reçue, commander le compresseur d'air (2) pour qu'il s'allume pour gonfler le réservoir d'air du système pneumatique avec la première priorité ; tout en augmentant la valeur enregistrée du nombre de la demande de gonflement du réservoir d'air du système pneumatique avec la première priorité de 1, et mesurant le temps de gonflement unique du réservoir d'air du système pneumatique avec la première priorité ; après cela, déterminer s'il y a une défaillance avec fuite d'air dans le réservoir d'air du système pneumatique avec la première priorité.

3. Procédé selon la revendication 2, dans lequel le fait de déterminer si la demande de gonflement du réservoir d'air du système pneumatique avec la première priorité parmi les N systèmes pneumatiques est reçue comprend les faits suivants :
obtenir un signal de pression du réservoir d'air du système pneumatique avec la première priorité, et déterminer si le signal de pression est inférieur ou égal à une limite inférieure d'une plage de pression définie, ou si le signal de pression est supérieure ou égale à une limite supérieure de la plage de pression définie ;
si le signal de pression du réservoir d'air du système pneumatique avec la première priorité est inférieur ou égal à la limite inférieure de la plage de pression définie du réservoir d'air du système pneumatique avec la première priorité, déterminer que la demande de gonflement du système pneumatique avec la première priorité est reçue ;
si le signal de pression du réservoir d'air du système pneumatique avec la première priorité est supérieure ou égale à la limite supérieure de la plage de pression définie du réservoir d'air du système pneumatique avec la première priorité, déterminer qu'aucune demande de gonflement du système pneumatique avec la première priorité n'est reçue.

4. Procédé selon la revendication 1, comprenant en outre :
s'il n'y a aucune défaillance avec fuite d'air dans le réservoir d'air du système pneumatique avec la première priorité, remettre à zéro un nombre enregistré de la demande de gonflement et la valeur mesurée en temps du temps de gonflement unique du réservoir d'air du système pneumatique avec la première priorité, puis déterminer s'il y a une défaillance avec fuite d'air dans le réservoir d'air du système pneumatique avec la seconde priorité.

5. Dispositif de commande pneumatique, le dispositif comprenant :
une unité de détermination (102), configurée pour : obtenir une valeur mesurée en temps d'un temps de gonflement unique d'un réservoir d'air d'un système pneumatique avec une première priorité selon des priorités de N systèmes pneumatiques alimentés en air par un compresseur d'air (2) d'un véhicule, déterminer si la valeur mesurée en temps du temps de gonflement unique du réservoir d'air du système pneumatique avec la première priorité est supérieure ou égale à un seuil de temps défini ; si la valeur mesurée en temps du temps de gonflement unique du réservoir d'air du système pneumatique avec la première priorité est inférieure au seuil de temps défini, obtenir une valeur enregistrée d'un nombre d'une demande de gonflement du réservoir d'air du système pneumatique avec la première priorité ; déterminer si la valeur enregistrée du nombre de la demande de gonflement du réservoir d'air du système pneumatique avec la première priorité est supérieure ou égale à un seuil de nombre défini ; si la valeur enregistrée du nombre de la demande de gonflement du réservoir d'air du système pneumatique avec la première priorité est supérieure ou égale au seuil de nombre défini, déterminer qu'il y a une défaillance avec fuite d'air dans le réservoir d'air du système pneumatique avec la première priorité ; et, si la valeur enregistrée du nombre de la demande de gonflement du réservoir d'air du système pneumatique avec la première priorité est inférieure au seuil de nombre défini, déterminer qu'il n'y a aucune défaillance avec fuite d'air dans le réservoir d'air du système pneumatique avec la première priorité ; si la valeur mesurée en temps du temps de gonflement unique du réservoir d'air du système pneumatique avec la première priorité est supérieure ou égale au seuil de temps défini, déterminer qu'il y a une défaillance avec fuite d'air dans le réservoir d'air du système pneumatique avec la première priorité, dans lequel N est un nombre entier naturel ; et
une unité de commande (104), configurée pour, s'il y a une défaillance avec fuite d'air dans le réservoir d'air du système pneumatique avec la première priorité, émettre un rappel qu'il y a une défaillance avec fuite d'air dans le réservoir d'air du système pneumatique avec la première priorité, et commander le compresseur d'air (2) pour qu'il soit allumé, pour garantir un fonctionnement normal du système pneumatique du véhicule ;
dans lequel l'unité de détermination (102) est en outre configurée pour, s'il n'y a aucune défaillance avec fuite d'air dans le réservoir d'air du système pneumatique avec la première priorité, déterminer s'il y a une défaillance avec fuite d'air dans un réservoir d'air d'un système pneumatique avec une seconde priorité selon les priorités des N systèmes pneumatiques.

6. Dispositif selon la revendication 5, dans lequel l'unité de détermination (102) est en outre configurée pour :
initialiser la valeur enregistrée du nombre de la demande de gonflement et la valeur mesurée en temps d'un temps de gonflement unique d'un réservoir d'air de chacun des N systèmes pneumatiques ;
déterminer si la demande de gonflement du réservoir d'air du système pneumatique avec la première priorité parmi les N systèmes pneumatiques est reçue ; et
si la demande de gonflement du réservoir d'air du système pneumatique avec la première priorité est reçue, commander le compresseur d'air pour qu'il s'allume pour gonfler le réservoir d'air du système pneumatique avec la première priorité, augmenter la valeur enregistrée du nombre de la demande de gonflement du réservoir d'air du système pneumatique avec la première priorité de 1, et mesurer le temps de gonflement unique du réservoir d'air du système pneumatique avec la première priorité, après cela, déterminer s'il y a une défaillance avec fuite d'air dans le réservoir d'air du système pneumatique avec la première priorité.

7. Dispositif selon la revendication 6, dans lequel l'unité de détermination (102), configurée pour déterminer si la demande de gonflement du réservoir d'air du système pneumatique avec la première priorité parmi les N systèmes pneumatiques est reçue, est l'unité de détermination (102) configurée pour :
obtenir un signal de pression du réservoir d'air du système pneumatique avec la première priorité, et déterminer si le signal de pression est inférieur ou égal à une limite inférieure d'une plage de pression définie, ou si le signal de pression est supérieure ou égale à une limite supérieure de la plage de pression définie ;
si le signal de pression du réservoir d'air du système pneumatique avec la première priorité est inférieur ou égal à la limite inférieure de la plage de pression définie du réservoir d'air du système pneumatique avec la première priorité, déterminer que la demande de gonflement du système pneumatique avec la première priorité est reçue ;
si le signal de pression du réservoir d'air du système pneumatique avec la première priorité est supérieure ou égale à la limite supérieure de la plage de pression définie du réservoir d'air du système pneumatique avec la première priorité, déterminer qu'aucune demande de gonflement du système pneumatique avec la première priorité n'est reçue.

8. Dispositif selon la revendication 5, dans lequel l'unité de détermination (102) est en outre configurée pour, s'il n'y a aucune défaillance avec fuite d'air dans le réservoir d'air du système pneumatique avec la première priorité, remettre à zéro la valeur enregistrée du nombre de la demande de gonflement et la valeur mesurée en temps du temps de gonflement unique du réservoir d'air du système pneumatique avec la première priorité, alors déterminer s'il y a une défaillance avec fuite d'air dans le réservoir d'air du système pneumatique avec la seconde priorité.

9. Véhicule, comprenant le dispositif de commande pneumatique selon l'une quelconque des revendications 4 à 8.

10. Véhicule, comprenant :
un processeur, configuré pour exécuter une pluralité d'instructions ;
une mémoire, configurée pour stocker la pluralité d'instructions ;
dans lequel la pluralité d'instructions sont configurées pour être stockées par la mémoire et pour être chargées par le processeur pour exécuter le procédé de commande pneumatique selon l'une quelconque des revendications 1 à 4.

11. Support de stockage lisible par ordinateur, stockant une pluralité d'instructions, la pluralité d'instructions étant configurées pour être chargées par un processeur pour exécuter le procédé de commande pneumatique selon l'une quelconque des revendications 1 à 4.
